# EUROPÄISCHE PATENTSCHRIFT

(11) **EP 1 890 868 B1**
(45) Veröffentlichungstag und Bekanntmachung des Hinweises auf die Patenterteilung: **22.07.2009**
(21) Anmeldenummer: 06741635.4
(22) Anmeldetag: 12.06.2006
(51) Int. Cl.: B32B 5/28, B29C 70/50

(54) **BIEGESTEIFE VERBUNDPLATTE**
FLEXURALLY RIGID COMPOSITE SHEET
PLAQUE COMPOSITE RESISTANT A LA FLEXION

(30) Priorität: 13.06.2005 EP 05012632
(43) Veröffentlichungstag der Anmeldung: 27.02.2008
(73) Patentinhaber: Quadrant Plastic Composites AG, 5600 Lenzburg 1 (CH)
(72) Erfinder: BRENTRUP, Karl-Ludwig, CH-5103 Möriken (CH); KEILBACH, Andreas, 79725 Laufenburg/Baden (DE)
(74) Vertreter: Schmauder & Partner AG Patent- & Markenanwälte VSP
(86) Internationale Anmeldenummer: PCT/CH2006/000310
(87) Internationale Veröffentlichungsnummer: WO 2006/133586

(56) Entgegenhaltungen:
- EP-A- 0 637 510
- EP-A- 0 646 454
- EP-A- 0 945 253
- WO-A-97/10950
- DE-A1- 4 208 812
- DE-A1- 19 520 477

## Beschreibung

Die Erfindung betrifft eine biegesteife Verbundplatte mit einer oder zwei Deckschichten aus glasfaserverstärktem Polypropylen und einer Kernschicht aus luftporenhaltigem glasfaserverstärktem Polypropylen.

Thermoplastisch verformbare Halbzeugplatten aus glasfaserverstärktem Polypropylen, so genannte GMT-Platten, werden in zunehmendem Maße zur Herstellung von Formteilen, insbesondere für Kraftfahrzeugteile eingesetzt. Sie werden in großtechnischem Maßstab hergestellt durch Zusammenführen von Glasmattenbahnen und Polypropylen- Schmelzebahnen in einer Doppelbandpresse und Verpressen bei Drücken weit oberhalb von 1 bar. Derartige, im allgemeinen 0,5 bis 3 mm dicke "Kunststoffbleche" zeichnen sich durch hohe Zähigkeit und Festigkeit aus.

Für manche Anwendungszwecke, insbesondere bei großflächigen Teilen im Bauwesen, ist es von Nachteil, dass GMT-Platten recht dünn und nicht biegefest sind. Der Erfindung lag daher die Aufgabe zugrunde, biegefeste Verbundplatten bereitzustellen, die ausreichend stabil und dennoch leicht sind.

Gegenstand der Erfindung ist eine biegefeste Verbundplatte, enthaltend
A. eine oder zwei Deckschichten mit einer Dicke von 0,5 bis 5 mm aus glasfaserverstärktem Polypropylen mit einem Glasgehalt von 20 bis 60 Gew.% und einem Gehalt an Luftporen von weniger als 5 Vol.%, und
B. einer Kernschicht mit einer Dicke von 2 bis 40 mm aus glasfaserverstärktem Polypropylen mit einem Glasgehalt von 35 bis 80 Gew.% und einem Gehalt an Luftporen von 20 bis 80 Vol.%,
wobei die Kernschicht erhalten wurde durch trockenes Vermischen von Polypropylenfasern und Glasfasern, Vernadeln des Mischvlieses und Heißverpressen.

Die DE- A 195 20 477 beschreibt faserverstärkte GMT-Platten, die aufgrund der Rückstellkräfte der Glasmatten beim Erhitzen expandieren und in ungleichmäßiger Verteilung Luftblasen enthalten. Diese expandierten GMT-Platten können als Stützkern mit nicht expandierten GMT-Folien thermisch verpresst werden. Im Beispiel 1 wird eine expandierte Platte beschrieben, deren Glasfasergehalt bei nur 30 Gew.% liegt.

Als Schicht A kommen übliche GMT-Platten mit einer Dicke von 0,5 bis 5 mm, vorzugsweise von 1 bis 3 mm in Frage. Sie enthalten 20 bis 60, vorzugsweise 25 bis 50 Gew.% Glasfasern. Die Thermoplastmatrix ist Polypropylen, vorzugsweise mit einem MFI (230°C, 2.16 kp) nach DIN 53735 von 20 bis 150 g/10 min. Die Glasfasern sind vorzugsweise ungerichtet und sind im Gewichtsmittel 10 bis 100 mm, insbesondere 20 bis 50 mm lang. Es ist aber auch möglich, zur Herstellung der Platten Kombinationen von Glasfasergewebe oder -gelege mit Lagen aus ungerichteten Fasern einzusetzen. Auf jeden Fall werden die Fasern aber vor der Tränkung mit der Polypropylenschmelze genadelt, wobei die Fasermatte verfestigt und die Fasern etwas gebrochen werden. Bedingt durch den Herstellprozess durch Verpressen auf der Doppelbandpresse und gleichzeitiges Abkühlen enthalten die GMT-Platten weniger als 5 Vol.%, vorzugsweise weniger als 2 Vol.% und insbesondere überhaupt keine Luftporen.

Die Kernschicht B besteht aus glasfaserverstärktem Polypropylen mit einem Glasgehalt von 35 bis 80, vorzugsweise von 40 bis 70 Gew.%. Die Fasern sind vorzugsweise ungerichtet und ebenfalls vemadelt, wobei bedingt durch die Vliesbildung und Nadelung einige Fasern auch in z- Richtung ausgerichtet sind. Erfindungswesentlich ist, dass die Kernschicht Luftporen enthält und zwar 20 bis 80, vorzugsweise 25 bis 75 Vol.%. Die Kernschicht ist im fertigen Verbundwerkstoff 2 bis 40 mm, vorzugsweise 3 bis 30 mm dick. Platten für die Kernschicht werden erfindungsgemäß hergestellt durch trockenes Vermischen von Thermoplastfasern und Glasfasern, Vernadeln des Mischvlieses, Erwärmen auf Temperaturen oberhalb des Erweichungspunktes des Polypropylens und Verpressen. Vorzugsweise erfolgt das Verpressen kontinuierlich auf einer Doppelbandpresse, insbesondere nacheinander durch ein beheiztes und ein gekühltes Presswerkzeug, in welchen das Mischvlies jeweils bei einem Druck von weniger als 0,8 bar mindestens 3 sec verpresst wird. Ein derartiges Verfahren ist bereits vorgeschlagen worden. Beim Vermischen der Fasern, z.B. nach dem Krempel- oder Airlay-Verfahren werden die Glasfaserbündel geöffnet, so dass die Fasern als individuelle Filamente vorliegen. Dies hat zur Folge, dass die beim Heißverpressen des Mischvlieses in der Kernschicht verbleibenden Luftporen gleichmäßig verteilt sind, was zu gegenüber expandierten GMT-Platten verbesserten mechanischen Eigenschaften führt.

Die erfindungsgemäße Verbundplatte wird zweckmäßigerweise dadurch hergestellt, dass man diskontinuierlich die einzelnen Schichten A und B übereinanderlegt und in einer Presse bei Temperaturen zwischen 180 und 220°C, vorzugsweise zwischen 190 und 210°C 5 bis 50 min lang, vorzugsweise 10 bis 30 min lang bei Drücken zwischen 0,1 und 1 bar verpresst, wobei die Schichtenfolge vorzugsweise A - B - A ist.

Da nach dem oben beschriebenen Herstellverfahren für die luftporenhaltigen Platten im allgemeinen nur Dicken bis maximal 10 mm erreichbar sind, legt man beim Verpressen - wenn man dickere Verbundplatten herstellen will - mehrere solcher luftporenhaltiger Platten übereinander. Bei der Herstellung der Verbundplatten können zur Oberflächenveredelung funktionelle Schichten, z.B. Folien (die gegebenenfalls eingefärbt sein können), textile Gewebe oder dünnen Faservliese mitverpresst werden. Es ist auch möglich, mineralische Granulate oberflächlich einzupressen.

Die äusseren faserverstärkten Lagen können mit funktionellen Schichten versehen sein, beispielsweise mit Polyproplyen-Folien zur Abdichtung, für optische Verbesserung, zur Haftvermittlung und dergleichen.

In die äusseren Lagen können Gewebe, Gelege und andere Formen der gerichteten Verstärkung eingebettet sein, um dem ganzen Sandwichverbund eine extreme Steifigkeit zu verleihen.

Die erfindungsgemäßen Verbundplatten haben gegenüber üblichen GMT-Platten A den Vorteil, dass sie biegefest und nagel- und schraubbar sind. Gegenüber luftporenhaltigen Platten B ohne Deckschichten haben sie den Vorteil einer glatten, abriebfesten und wasserdichten Oberfläche sowie einer besseren Steifigkeit.

Gegenüber bekannten Verbundplatten mit einer Kernschicht aus Schaum- oder Wabenstrukturen und GMT-Deckschichten haben die erfindungsgemäßen Verbundplatten den Vorteil einer besseren Schub- und Scherfestigkeit.

Hauptanwendungsgebiete für die Verbundplatten sind Trennwände und Schalungselemente im Bauwesen, ferner im Möbelbau als Ersatz für Spanplatten und Schichtholz.

## Patentansprüche

1. Biegesteife Verbundplatte, enthaltend
A. eine oder zwei Deckschichten mit einer Dicke von 0,5 bis 5 mm aus glasfaserverstärktem Polypropylen mit einem Glasgehalt von 20 bis 60 Gew.% und einem Gehalt an Luftporen von weniger als 5 Vol.%, und
B. einer Kernschicht mit einer Dicke von 2 bis 40 mm aus glasfaserverstärktem Polypropylen mit einem Glasgehalt von 35 bis 80 Gew.% und einem Gehalt an Luftporen von 20 bis 80 Vol.%,
**dadurch gekennzeichnet, dass** die Kernschicht erhalten wurde durch trockenes Vermischen von Polypropylenfasern und Glasfasern, Vernadeln des Mischvlieses und Heißverpressen.

2. Verbundplatte nach Anspruch 1, **dadurch gekennzeichnet, dass** die Glasfasern in der Schicht A als vemadelte Matte aus ungerichteten Fasern einer mittleren Länge (Gewichtsmittel) von 10 bis 100 mm oder als mit ungerichteten Fasern vernadeltes Gewebe oder Gelege vorliegen.

3. Verbundplatte nach Anspruch 1, **dadurch gekennzeichnet, dass** die Glasfasern in der Schicht B ungerichtete, miteinander vernadelte Fasern einer mittleren Länge (Gewichtsmittel) von 10 bis 60 mm sind.

4. Verbundplatte nach Anspruch 1, mit der Schichtenfolge A - B - A.

5. Verbundplatte nach Anspruch 1, **dadurch gekennzeichnet, dass** sie ein- oder beidseitig mit funktionellen Schichten, z. B. mit Folien, textilen Geweben oder Faservliesen versehen ist.

6. Verfahren zur Herstellung der Verbundplatte nach Anspruch 1, **dadurch gekennzeichnet, dass** die einzelnen Schichten diskontinuierlich in einer Presse bei Temperaturen zwischen 180 und 220 °C 5 bis 50 min lang verpresst werden.

7. Verfahren nach Anspruch 6, **dadurch gekennzeichnet, dass** die Kernschicht B dabei aus mehreren übereinandergelegten Einzellagen einer Dicke von jeweils 1 bis 10 mm zusammengesetzt ist.

## Claims

1. A flexurally rigid composite sheet, comprising
A. one or two cover layers with a thickness of 0.5 to 5 mm made of glass-fiber reinforced polypropylene with a glass content of 20 to 60 wt-% and an air voids content of less than 5 vol-%, and
B. a core layer with a thickness of 2 to 40 mm made of glass-fiber reinforced polypropylene with a glass content of 35 to 80 wt-% and an air voids content of 20 to 80 vol-%,
**characterized in that** the core layer has been obtained by dry blending of polypropylene fibers and glass fibers, needling of the blended nonwoven, and heat pressing.

2. The composite sheet according to claim 1, **characterized in that** the glass fibers in layer A are present as a needled mat of nondirectional fibers with an average length (weight average) of 10 to 100 mm or as a woven fabric or nonwoven fabric needled with nondirectional fibers.

3. The composite sheet according to claim 1, **characterized in that** the glass fibers in layer B are nondirectional fibers with an average length (weight average) of 10 to 60 mm needled together.

4. The composite sheet according to claim 1, having the layer sequence A - B - A.

5. The composite sheet according to claim 1, **characterized in that** it is provided on one or both sides thereof with functional layers, e.g. with foils, woven textile fabrics or fiber nonwovens.

6. A method for producing the composite sheet according to claim 1, **characterized in that** the single layers are pressed together discontinuously in a press at temperatures between 180 and 220°C for 5 to 50 min.

7. The method according to claim 6, **characterized in that** the core layer B is composed of several single layers stacked on top of each other, each having a thickness of 1 to 10 mm.

## Revendications

1. Plaque composite résistante à la flexion, comprenant
A. une ou deux couches couvrantes d'une épaisseur de 0.5 à 5 mm faite de polypropylène renforcée par des fibres de verre avec une teneur en verre de 20 à 60% en poids et une teneur en pores d'air de moins de 5% en volume, et
B. une couche centrale d'une épaisseur de 2 à 40 mm faite de polypropylène renforcée par des fibres de verre avec une teneur en verre de 35 à 80% en poids et une teneur en pores d'air de 20 à 80% en volume,
**caractérisée en ce que** la couche centrale a été obtenue par mélange sec de fibres de polypropylène et de fibres de verre, aiguilletage du non-tissé mélangé, et compression à chaud.

2. Plaque composite selon la revendication 1, **caractérisée en ce que** les fibres de verre dans la couche A comporte une natte aiguilletée de fibres non-directionnelles avec une longueur moyenne (moyenne de poids) de 10 à 100 mm ou un tissu ou non-tissé aiguilleté avec des fibres non-directionnelles.

3. Plaque composite selon la revendication 1, **caractérisée en ce que** les fibres de verre en couche B sont des fibres non-directionnelles mutuellement aiguilletées avec une longueur moyenne (moyenne de poids) de 10 à 60 mm.

4. Plaque composite selon la revendication 1, avec la séquence de couches A - B - A.

5. Plaque composite selon la revendication 1, **caractérisée en ce que** elle dotée sur un ou deux cotés avec des couches fonctionnelles, telles que des films, des textiles tissés ou des fibres non-tissées.

6. Procédé de fabrication d'une plaque composite selon la revendication 1, **caractérisé en ce que** l'on comprime les couches individuelles en façon discontinuelle dans une presse avec une température entre 180 et 220°C pendant 5 à 50 min.

7. Procédé selon la revendication 6, **caractérisé en ce que** la couche centrale B est faite de plusieurs couches individuelles empilés l'une sur l'autre, chaque couche ayant une épaisseur de 1 à 10 mm.
